# EUROPEAN PATENT SPECIFICATION

(11) **EP 1 879 729 B1**
(45) Date of publication and mention of the grant of the patent: **07.07.2010**
(21) Application number: 05750306.2
(22) Date of filing: 02.05.2005
(51) Int. Cl.: B29C 45/03, B29C 45/66, B29C 45/40, B29C 45/50

(54) **ELECTROMECHANICAL DRIVE HORIZONTAL BENCH PRESS FOR THERMOPLASTICS INJECTION MOLDING**
HORIZONTALTISCHPRESSE MIT ELEKTROMECHANISCHEM ANTRIEB FÜR DAS SPRITZGIESSEN VON THERMOPLASTEN
PRESSE D'ETABLI HORIZONTAL A ENTRAINEMENT ELECTROMECANIQUE POUR MOULAGE PAR INJECTION DE MATIERES THERMOPLASTIQUES

(43) Date of publication of application: 23.01.2008
(73) Proprietor: Dibi S.r.l., 21046 Malnate (IT)
(72) Inventor: DELLA BERNARDA, Mario, I-21046 Malnate (IT); DELLA BERNARDA, Carlo, I-21049 Tradate (IT)
(74) Representative: Pellegri, Alberto
(86) International application number: PCT/IT2005/000250
(87) International publication number: WO 2006/117807

(56) References cited:
- EP-A- 0 890 426
- US-A- 5 143 736
- PATENT ABSTRACTS OF JAPAN vol. 011, no. 348 (M-642), 14 November 1987 (1987-11-14) -& JP 62 128722 A (NISSEI PLASTICS IND CO), 11 June 1987 (1987-06-11)
- PATENT ABSTRACTS OF JAPAN vol. 1996, no. 06, 28 June 1996 (1996-06-28) -& JP 08 039633 A (SUMITOMO HEAVY IND LTD), 13 February 1996 (1996-02-13)
- PATENT ABSTRACTS OF JAPAN vol. 010, no. 077 (M-464), 26 March 1986 (1986-03-26) -& JP 60 220723 A (NITSUSEI JIYUSHI KOGYO KK), 5 November 1985 (1985-11-05)
- MICHAELI W ET AL: "VOLLELEKTRISCHE SPRITZGIESSMASCHINE AUF DEM PRUEFSTAND" KUNSTSTOFFBERATER, KUNSTSTOFF VERLAG. ISERNHAGEN, DE, vol. 38, no. 1 / 2, January 1993 (1993-01), pages 28-32, XP000345075 ISSN: 0172-6374

## Description

The present invention relates in general to presses for injection molding of thermoplastic materials and in particular to relatively small presses (mini-presses) of small size and weight capable of exerting a closing force generally up to about 10 tons.

Mini-presses are commonly employed in laboratories for developing and prototyping injection moldable objects of thermoplastic materials and/or for producing pieces of relatively small size. For such presses, weight and encumbrance represent two aspects of fundamental importance, in consideration of the use to which they are destined and to the environment in which they are often deployed.

In order to reduce encumbrance and weight, commercially available mini-presses employ hydraulic or pneumatic circuits for actuating the operating movements of the press. In case of hydraulic transmissions, hydraulic pumps driven by electric motors are used.

In many environments of use of these mini-presses, the use of pneumatic actuators is unsuitable because they are too noisy, however, even the noise generated by hydraulic pumps of a more traditional press using hydraulic actuating means, may infringe on restrictive rules on work place noise levels, thus requiring the installation of fonoabsorbing carters which beside their cost, increase encumbrance.

Another drawback of traditional hydraulic mini-presses, is represented by the fact that the hydraulic fluid that is commonly used, constitutes a toxic waste material and this implies additional costs relative to fulfillment of waste disposal regulations.

On the other end, alternative solutions based on mechanical transmissions directly driven by electric motors, in the way they are known and employed in electromechanical drive presses, generally of large size, have not found acceptance in mini-presses because of weights and encumbrance decisively greater than those of hydraulic or pneumatic presses, notwithstanding the advantage that presses with an electro-mechanical drive system have in terms of power saving in view of the fact that they absorb electric power only during the phase of actuation of the movement.

Document EP-A-0 890 426 discloses a horizontal bench press in accordance with the preamble of claim 1.

The objective of the present applicants was to devise a horizontal bench press with electro-mechanical drive system, free of any hydraulic transmission, that would not be penalized in terms of weight and encumbrance, compared to an additional horizontal bench press with hydraulic drive system for injection molding of thermoplastic materials.

This objective has been brilliantly achieved by the horizontal bench press for injection molding of thermoplastic materials with a fully electromechanical drive systems as defined in the annexed claims.

The novel technical solutions of the peculiar horizontal bench press architecture of the present applicants, achieve an outstanding containment of encumbrances and weights that permit to realize a bench mini-press, capable of a closing force of up to 7 times, having extremely reduced dimensions (140 x 50 x 60 cm) and a total weight lower than 200 Kg. In other words, the mini-press with fully electromechanical drive system of the present applicants has dimensions and weight that preferably compared to that of a common hydraulic mini-press of the same capabilities.

Such an unexpected and important result is obtained by virtue of a space and weight saving organization of the drive organs of the injection press movements, besides the use of circulating ball-screw devices for rotary to linear motion transformation.

The use circulating balls screw device ensure in addition a remarkably higher precision in positioning of movement axis compared to the precision levels that can be obtained by common hydraulic transmissions.

The relatively silentness of electric motors and of circulating balls screw devices compared to the hydraulic pumps ensure fulfillment of acoustic emission regulations without requiring the use of fonoabsorbing carters.

The absence of hydraulic fluids eliminates waste disposal costs.

Compared to known mini-presses hydraulically or pneumatically driven, productivity is enhanced by the fact that the distinct electric motors ensure a complete overlapping of movements without any loss of power, besides other productivity enhancing features that will be described in the following description of a practical embodiment of the novel mini-press.

The different aspects and advantages of this invention will become even more evident through the description of a preferred embodiment with reference to the attached drawings, wherein:

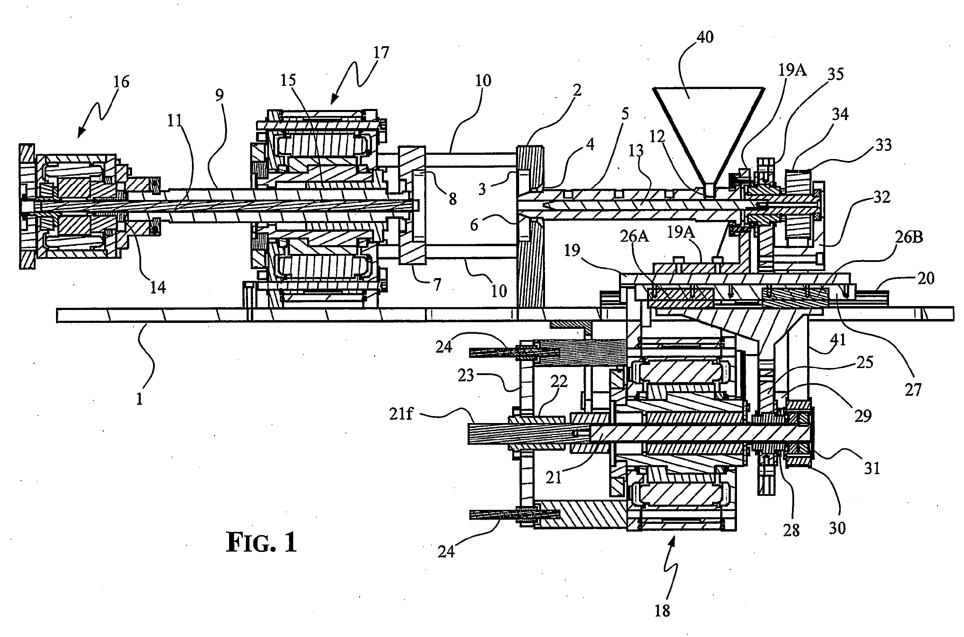

**Figure 1** is a simplified cross section view of the horizontal bench press for injection molding of thermoplastic materials made according to the present invention;
**Figure 2** is an elevation view from the injection side of the press of Figure 1;

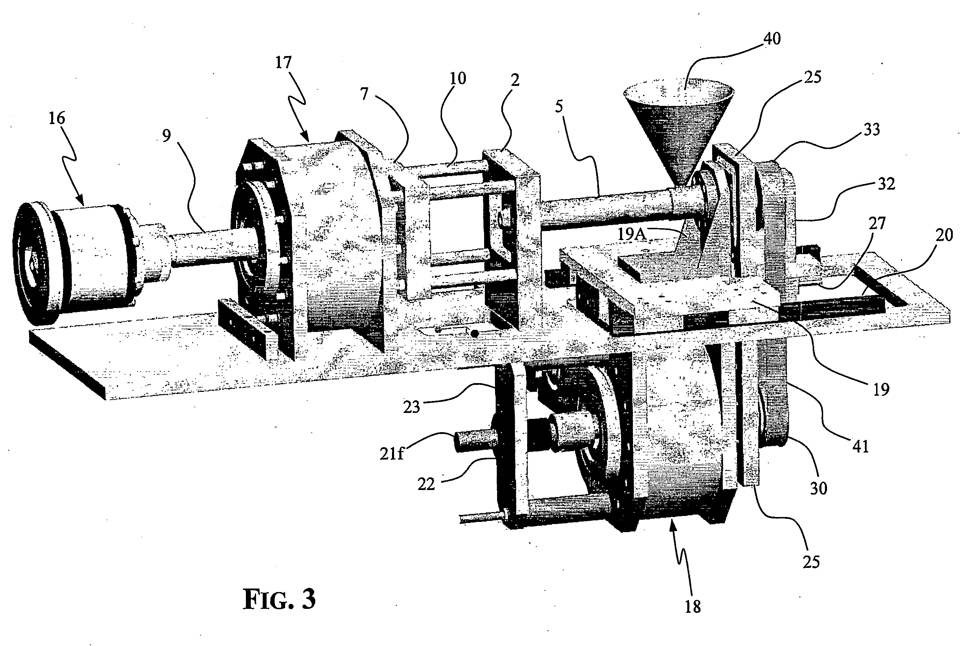

**Figure 3** is a simplified three-dimensional assembly view of the press from a different side.
**Figure 4** is a simplified three-dimensional assembly view of the press from another side.

With reference to the figures, the stress structure of the press comprises an horizontal bench 1, to be placed on a suitable support of table (not shown in the figures).

A robust platen 2 is fixed vertically onto the horizontal bench and is mechanically tied by four horizontal parallel guide rods 10 to the casing of the motor 17 that is also solidly fastened onto the bench 1.

The vertical platen 2 has a recess 3 in which a first half mold having a conical seat suitable to sealingly receive the conical nozzle 6 of a injection cylinder 5, passing through a hole 4 of the plate 2 and inside which a plunger 13, commonly having a screw-like shape, axe.

The mobile platen 7 of the press is slightly sustained by the horizontal guide bars and has a recess 8 in which the other half mold is mounted.

The opening and closing of the mold is actuated by the motor 17, the tubular shaft of which onto which the rotor of the motor is mounted, includes the lead nut portion of a circulating ball worm gear 15, the worm portion of which is formed over a tubular shaft 9, the outer cylindrical surface of which has longitudinal splines and the one end mechanically connected to the mobile platen 7 of the press. Rotation of the rotor of the motor 17 produces advancement or retraction of the splined tubular shaft 9, depending on the commanded direction of rotation of the motor 17, thus causing and opening the mold.

As may be observed, the tubular shaft 9 for the opening and closing of the mold extends for a certain distance out of the other side of the casing of the motor 17 for sustaining at its free end a second motor 16, the function of which is to expel the molded piece from the half mold carried by the mobile platen 7 of the press in the recess 8, once the mold has been opened.

The molded piece expulsion action from the mold is performed by the expulsion road 11 passing inside the tubular shaft 9 of opening and closing of the mold.

The tubular shaft on which the rotor of the motor 16 is mounted comprises the lead nut portion of a circulating ball worm gear 14, that engages onto a threaded portion of the road 11, which may therefore be advanced in order to expel the molded piece from the cavity of the half mold carried by the mobile platen 2 of the press and retracted to its stand-by position, by commanding rotation of the motor 16 in one and in the opposite direction, respectively.

The co-axiality of movement of the mold closing and opening shaft 9 and of the molded piece expulsion road 11, and of the respective worm gears of transformation rotational/linear of the motion (circulating ball worm gears 14 and 15) used by the respective motors 16 and 17, permits to sustain the actuating device of expulsion of the molded piece in a cantilever fashion at the end of the tubular shaft 9 and closing and opening of the mold. This minimizes encumbrance and weights avoiding the need of realizing distinct structures specifically dedicated to implement a molded piece expulsion function from the half mold carried in the recess 8 of the mobile platen 7 of the press.

As already mentioned, the press employs an injection device having an helicoidal shaped plunger 13 acting inside the injection cylinder 5, the conical outlet of which is pushed to sealingly abut against a conical seat of the inlet port of the half mold mounted inside the recess 3 of the fixed platen 2 of the press, passing through a hole 4 of the platen.

The helicoidal plunger 13 "draws" a predetermined volume of fluidified thermoplastic material in front of its end, by backing and rotating it, such to leave behind a predetermined volume of plastic material that was contained between the helicoidal volutes of the plunger 13 while it is backed inside the injection cylinder 5 and turned at a speed such to render practically null the longitudinal force on the fluid material contained in the spaces between adjacent volutes of the helicoidal thread.

Of course, during this phase of backing-in-rotation of the helicoidal plunger 13, causes the helicoidal thread to screw in the mass of fluidified thermoplastic material that fills the cylinder 5 being gravity fed therein through the hole 12 from a feed tank 40.

Therefore, the material fills the spaces between adjacent terms of the helicoidal thread of the plunger 13 being turned back into the cylinder 5.

The injection of the predetermined volume of the thermoplastic material into the mold takes place by linearly advanced (previously backed during the phase of drawing) in absence of rotation thus injecting the desired volume of fluidified thermoplastic material left in front of the helicoidal plunger 13 into the mold.

According to another essential feature of the mini-press of this invention, these two movements of the helicoidal plunger 13, respectively of backing-in-rotation and of advancing in absence of rotation, are actuated by employing a single motor. This significantly simplifies the mechanics and the electronic control system of the machine, while, at the same time reducing cycling times and maintenance costs because of the reduced number of components. Of course these ancillary advantages add to the sensible reduction of weights and encumbrance that the unification of the actuator (motor) achieves.

With reference to the figures, the single motor 18 commanding the drawing and injection phases has its casing suspended from a main slide 19 onto which is fastened the bracket 10A that sustains the injection cylinder 5. The main slide 19 may be eventually shifted on longitudinal guides 20 of the bench 1. Therefore, in the shown embodiment, the motor 18 is spatially located below the plane of the bench 1.

The rotor of the motor 18 is mounted on a longitudinally splined shaft 21 in a way that the shaft 21 may translate axially (longitudinally) while rotating.

To this end, a threaded end 21f of the splined shaft 21 engages in the lead nut of a circulating ball worm gear 22, that in the shown example is molded in a structure composed of the plate 23 that is fastened through registrable spacers 24 to the casing of the motor 18, such that the rotation of the motor 18 in one direction or in the opposite direction, causes a corresponding linear translation of the splined shaft 21 in a longitudinal direction or the opposite direction.

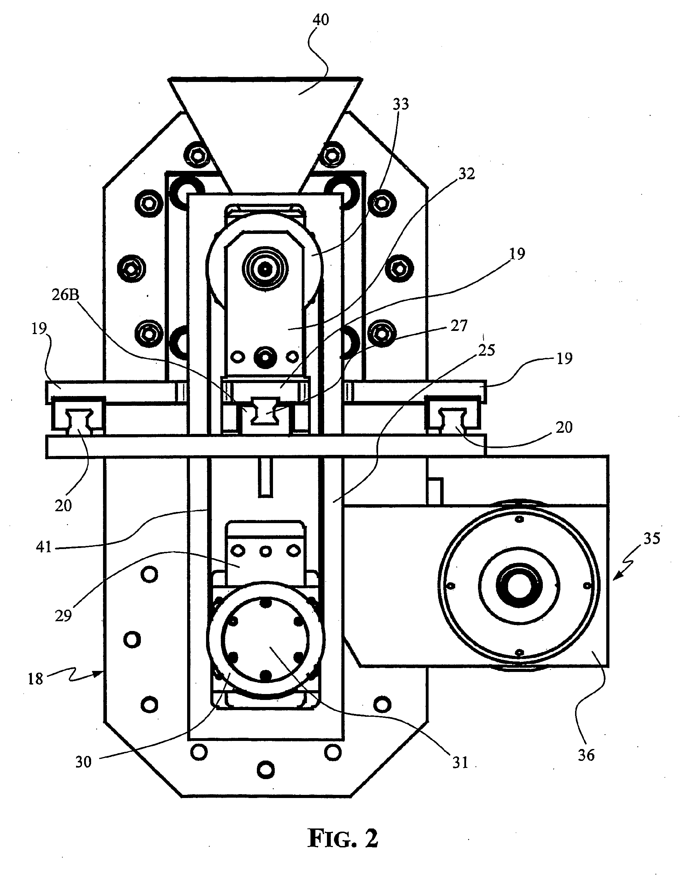

The riser bracket 25 is provided with two slides 26A and 26B for translating along a central longitudinal guide 27, in an essentially independent manner from the main slide 19. These details will be more clearly observable in the view of Figure 2.

At its lower end, the riser bracket 25 is mechanically connected to the splined shaft 21 through a pushing 28 such that the riser bracket 25 shifts longitudinally with the splined shaft 21 upon commanding rotation of the motor 18 in one or in the opposite direction.

A bracket 29, fixed to the riser bracket 25, sustains a first belt pulley 30 that engages with the splined shaft 21 through a unidirectional device of transmission of rotation 21 that determines rotation of the pulley 30 during the phase of backing (toward the right end side of the drawing) of the splined shaft 21 and of the riser bracket 25 and of the parts, including the pushing 28, to it fastened, on the contrary, during the phase of rotation of the motor 18 in the opposite direction that makes the splined shaft 21 return by moving toward the left end side of the drawing, the pulley 30 is not turned in the opposite direction.

In the upper part of the riser bracket 25, a bracket 32 sustains a second belt pulley 33, to which the belt 41 transmits the rotation during the phase of backing toward the right end side of the drawing. The second pulley 33 is kept on a shaft 34, passing through the pushing 35 installed in the riser bracket 25.

To the left end of the shaft 34, a rod shaped terminal portion 13a of the helicoidal plunger 13 is connected, such that the hole assembly moves in a reciprocating manner, turning in phase of backing of the helicoidal plunger 13 and advancing without rotation in phase of advancing the helicoidal plunger 13 for injecting the required volume of thermoplastic material in the mold, the hole actuated by the splined shaft 21 of the motor 18.

The unidirectional device 31 determines that the plunger 13 backs rotating during the "drawing" phase and advance without rotating during the phase of injecting the thermoplastic material in the mold.

The whole injection group, carried on the main slide 19, may be backed off from the fixed platen 2 of the press by eventually unlocking appropriate mechanical stops on the longitudinal guides 20 of the bench 1, for carrying our cleaning and maintenance operations, as well as for installing a new mold, a new injection cylinder or for any other trimming operation that may be required.

According to an optional alternative, according to the preferred embodiment shown, an optional fourth motor may be contemplated for commanding the backing off of the whole injection group.

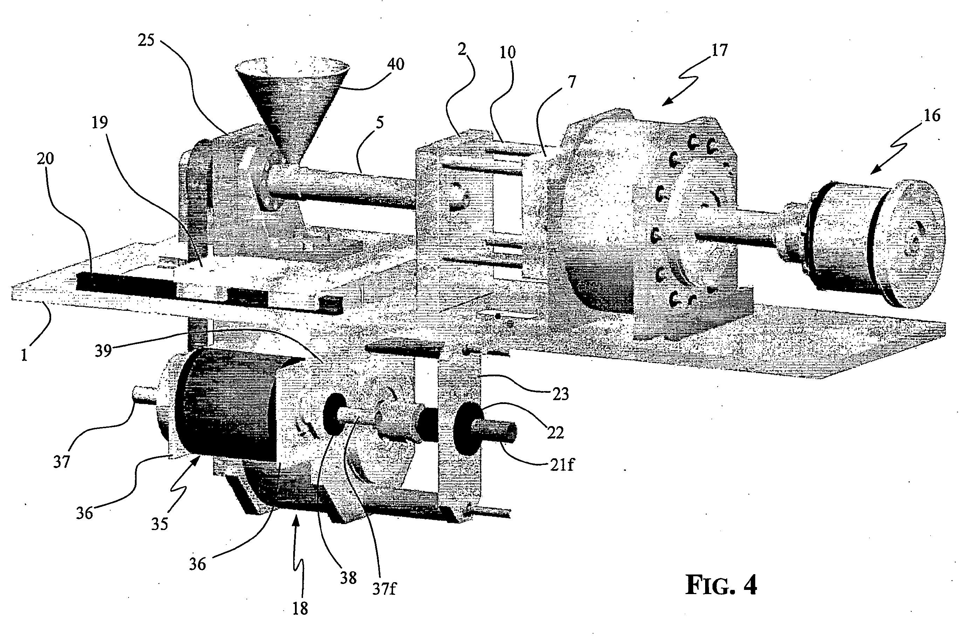

The view of Figure 2 and the three-dimensional view of Figure 4 permits to clearly observe such an optional fourth motor 35, the casing of which is mechanically fastened to the case of the motor 18, being mounted on the brackets 36.

The shaft 37 of the motor 35 has a threaded end 37f onto which engages the lead nut of a circulating ball worm gear 28, mounted on a bracket 39 fastened to the bench 1.

By commanding rotation of the motor 35 to cause the screwing of the shaft 35 through the lead nut of the worm gear 38, the whole injection group is backed off the fixed platen 2 of the press for carrying out any necessary trimming and maintenance operations and eventually returned to its work position, causing the coupling of the conical nozzle 6 of the injection cylinder 5 inside the receiving seat of the inlet port of the half mold installed in the recess 3 of the fixed platen 2 of the press.

## Claims

1. A horizontal bench press for injection molding of thermoplastic materials comprising a stress structure composed of a horizontal bench (1), a fixed platen (2) vertically fixed onto said horizontal bench (1) having a recess (3) for accommodating a first half mold and a hole (4) for the passage of a injection cylinder (5) for sealingly coupling a conical nozzle (6) of said cylinder (5) in a conical seat of said first half mold, a mobile platen (7) having a recess (8) for accommodating a second half mold, slidingly sustained by horizontal guides (10), shifted by a mold opening and closing shaft (9), an expelling device of a molded piece from said second half mold driven by an expulsion rod (11), a device for drawing a predetermined volume of fluid thermoplastic material and for injecting it inside the closed mold, functioning by backing in rotation and advancing without rotation an inner helicoidal plunger (13) of said injection cylinder (5) whereby the press has a fully electromechanical drive **characterized in that**
said expulsion rod (11) moves inside an axial hole of said mold opening and closing shaft (9), each being independently driven by a respective lead nut of a circulating ball worm gear (14, 15) engaging a threaded portion of said rod and said shaft and being turned by a respective electric motor (16, 17);
the reciprocating strokes, with and without rotation, respectively, of said helicoidal plunger (13) are produced by a single motor suspended from a main slide (19) movable on longitudinal guides (20) of said horizontal bench (1) and having a splined shaft (21) with a threaded end engaging a lead nut of a circulating ball worm gear (22) mechanically connected to the motor (18) for shifting longitudinally in one and in the other direction according to the direction of rotation of the motor, the other end of said splined shaft engaging a device (31) for unidirectionally transmitting its motion of rotation to a belt pulley (30), mechanically fastened to a riser bracket (25) longitudinally moving with said splined shaft (21) of the motor (18) for reciprocatingly moving with and without rotation said helicoidal plunger (13).

2. The press according to claim 1, wherein in its upper part, said riser bracket (25) sustains, through a bracket (32) a second pulley (33) driven through a belt (41) by said first pulley (30), during a phase of backing in rotation of said helicoidal plunger (13), keyed to a shaft (34) passing through a bushing (35) installed in said riser bracket (25) to which a rod terminal (13a) of said helicoidal plunger (13) is connected.

3. The press according to claim 2, wherein said riser bracket (25) has slides (26A, 26B) moving along a central longitudinal guide (27) carried by said main slide (19).

4. The press according to claim 1, wherein said motor (16) driving said expulsion rod (11) is mounted onto the cantilevering end of said mold opening and closing shaft (9).

5. The press according to claim 1, further comprising a fourth motor (35) the casing of which is mechanically connected to the motor (18) that actuates the reciprocating strokes of said plunger (13) the shaft (37) of said fourth motor (35) having a threaded end (37f) engaging the lead nut of a circulating ball worm gear (38) mounted on a bracket (39) fastened to said bench (1), for backing off and repositioning the whole injection assembly carried by said main slide (19).

## Patentansprüche

1. Horizontaltischpresse zum Spritzgießen von Thermoplasten, die eine Spannungsstruktur aufweist, die mit einer horizontalen Werkbank (1), einer festen Formaufspannplatte (2), die vertikal an der horizontalen Werkbank (1) befestigt ist, die eine Aussparung (3) zur Aufnahme einer ersten Halbform und ein Loch (4) zum Durchgang eines Einspritzzylinders (5) zur dichtenden Kopplung einer konischen Düse (6) des Zylinders (5) in einem konischen Sitz der ersten Halbform aufweist, einer beweglichen Formaufspannplatte (7), die eine Aussparung (8) zur Aufnahme einer zweiten Halbform aufweist, die verschiebbar durch horizontale Führungen (10) gehalten wird, die durch eine Formöffnungs- und Schließwelle (9) verschoben wird, einer Ausstoßvorrichtung für ein Formteil aus der zweiten Halbform, die durch eine Ausstoßstange (11) angetrieben wird, und einer Vorrichtung zusammengesetzt ist, um ein vorgegebenes Volumen eines flüssigen Thermoplasts einzusaugen und es in die geschlossene Form einzuspritzen, die durch Einziehen unter Rotation und Vorschieben ohne Rotation eines inneren schraubenförmigen Kolbens (13) des Einspritzzylinders (5) arbeitet, wodurch die Presse einen völlig elektromechanischen Antrieb aufweist, **dadurch gekennzeichnet, daß**
sich die Ausstoßstange (11) in einem axialen Loch der Formöffnungs- und -Schließwelle (9) bewegt, die jeweils unabhängig durch eine jeweilige Leitpatrone eines Umlaufkugel-Schneckengetriebes (14, 15) angetrieben werden, das mit einem Gewindeabschnitt der Stange und der Welle in Eingriff steht und durch einen jeweiligen Elektromotor (16, 17) gedreht wird;
die hin- und hergehenden Hübe mit bzw. ohne Rotation des schraubenförmigen Kolbens (13) durch einen einzelnen Motor erzeugt werden, der an einem Hauptgleitstück (19) aufgehängt ist, das auf longitudinalen Führungen (20) der horizontalen Werkbank (1) beweglich ist, und eine Keilwelle (21) mit einem Gewindeende aufweist, das mit einer Leitpatrone eines Umlaufkugel-Schneckengetriebes (22) in Eingriff steht, das zur longitudinalen Verschiebung in eine und in die andere Richtung gemäß der Drehrichtung des Motors mechanisch mit dem Motor (18) verbunden ist, wobei das andere Ende der Keilwelle mit einer Vorrichtung (31) zur Einrichtungsübertragung ihrer Drehbewegung auf eine Riemenscheibe (30) in Eingriff steht, die mechanisch an einer Speiserhalterung (25) befestigt ist, die sich zur Hin- und Herbewegung mit und ohne Rotation des schraubenförmigen Kolbens (13) longitudinal mit der Keilwelle (21) des Motors (18) bewegt.

2. Presse nach Anspruch 1, wobei die Speiserhalterung (25) in ihrem oberen Teil durch eine Halterung (32) eine zweite Riemenscheibe (33) hält, die während einer Phase einer Einzugsrotation des schraubenförmigen Kolbens (13) durch einen Riemen (41) durch die erste Riemenscheibe (30) angetrieben wird, die mit einer Welle (34) verkeilt ist, die durch eine Laufbuchse (35) geht, die in der Speiserhalterung (25) angebracht ist, mit der ein Stangenende (13a) des schraubenförmigen Kolbens (13) verbunden ist.

3. Presse nach Anspruch 2, wobei die Speiserhalterung (25) Gleitstücke (26A, 26B) aufweist, die sich längs einer mittleren longitudinalen Führung (27) bewegen, die durch das Hauptgleitstück (19) getragen wird.

4. Presse nach Anspruch 1, wobei der Motor (16), der die Ausstoßstange (11) antreibt, an dem freitragenden Ende der Formöffnungs- und -Schließwelle (9) angebracht ist.

5. Presse nach Anspruch 1, die ferner einen vierten Motor (35) aufweist, dessen Gehäuse mechanisch mit dem Motor (18) verbunden ist, der die hin- und hergehenden Hübe des Kolbens (13) betätigt, wobei die Welle (37) des vierten Motors (35) ein Gewindeende (37f) aufweist, das mit der Leitpatrone eines Umlaufkugel-Schneckengetriebes (38) in Eingriff steht, das an einer Halterung (39) angebracht ist, die an der Werkbank (1) befestigt ist, zum Zurücksetzen und Neupositionierung der gesamten Einspritzanordnung, die durch das Hauptgleitstück (19) getragen wird.

## Revendications

1. Presse d'établi horizontale pour moulage par injection de matières thermoplastiques, comprenant une structure de contrainte composée d'un établi horizontal (1), d'une plaque fixe (2) fixée verticalement sur l'établi horizontal (1), comportant un évidement (3) pour recevoir un premier demi-moule et un trou (4) pour le passage d'un cylindre d'injection (5) pour coupler de façon étanche une buse conique (6) du cylindre (5) à un siège conique du premier demi-moule, d'une plaque mobile (7) comportant un évidement (8) pour recevoir un deuxième demi-moule, soutenue de façon coulissante par des guides horizontaux (10), translatée par un arbre d'ouverture et de fermeture de moule (9), et d'un dispositif d'expulsion d'une pièce moulée à partir de la deuxième moitié de moule, entraîné par une tige d'expulsion (11), d'un dispositif pour tirer un volume prédéterminé de matière thermoplastique fluide et pour l'injecter dans le moule fermé, fonctionnant en reculant avec rotation et en avançant sans rotation un piston hélicoïdal intérieur (13) du cylindre d'injection (5), d'où il résulte que la presse est entraînée de façon entièrement électromécanique, **caractérisée en ce que** :
la tige d'expulsion (11) se déplace à l'intérieur d'un trou axial de l'arbre d'ouverture et de fermeture du moule (9), chacun étant entraîné indépendamment par un écrou mobile respectif d'une vis sans fin à boule mobile (14, 15) en contact avec une partie filetée de la tige et de l'arbre et entraînée en rotation par un moteur électrique (16, 17) respectif ;
les courses alternées, avec et sans rotation, respectivement, du piston hélicoïdal (13) sont produites par un seul moteur suspendu à partir d'un élément coulissant principal (19) mobile sur des guides longitudinaux (20) de l'établi horizontal (1) et comportant un arbre cannelé (21) ayant une extrémité filetée engagée dans un écrou mobile d'une vis sans fin à boule mobile (22) connectée mécaniquement au moteur (18) pour effectuer une translation longitudinale dans l'une ou dans l'autre direction conformément au sens de rotation du moteur, l'autre extrémité de l'arbre cannelé étant engagée dans un dispositif (31) pour transmettre de façon unidirectionnelle son mouvement de rotation à une poulie de courroie (30), fixée mécaniquement à un support élévateur (25) se déplaçant longitudinalement avec l'arbre cannelé (21) du moteur (18) pour un mouvement alterné avec et sans rotation du piston hélicoïdal (13).

2. Presse selon la revendication 1, dans laquelle dans sa partie supérieure, le support élévateur (25) soutient, par l'intermédiaire d'un support (32), une deuxième poulie (33) entraînée par l'intermédiaire d'une courroie (41) par la première poulie (30), pendant une phase de recul avec rotation du piston hélicoïdal (13), clavetée sur un arbre (34) passant à travers une douille (35) installée dans le support élévateur (25) auquel une extrémité de tige (13a) du piston hélicoïdal (13) est connectée.

3. Presse selon la revendication 2, dans laquelle le support élévateur (25) comporte des éléments coulissants (26A, 26B) mobiles le long d'un guide longitudinal central (27) porté par l'élément coulissant principal (19).

4. Presse selon la revendication 1, dans laquelle le moteur (16) entraînant la tige d'expulsion (11) est monté sur l'extrémité en surplomb de l'arbre d'ouverture et de fermeture de moule (9).

5. Presse selon la revendication 1, comprenant en outre un quatrième moteur (35) dont le carter est connecté mécaniquement au moteur (18) qui actionne les courses alternées du piston (13), l'arbre (37) du quatrième moteur (35) ayant une extrémité filetée (37f) s'engageant dans l'écrou mobile d'une vis sans fin à boule mobile (38) montée sur un support (39) fixé à l'établi (1), pour soulager et repositionner l'ensemble d'injection complet porté par l'élément coulissant principal (19).
